# EUROPÄISCHE PATENTANMELDUNG

(11) **EP 2 559 630 A1**
(43) Veröffentlichungstag der Anmeldung: **20.02.2013**
(21) Anmeldenummer: 12178813.7
(22) Anmeldetag: 01.08.2012
(51) Int. Cl.: B65D 35/08

(54) **Tube**

(30) Priorität: 16.08.2011 DE 102011110751
(71) Anmelder: Kaganer, Vadim, 67308 Einselthum (DE)
(72) Erfinder: Finkenzeller, Helmut, 87471 Durchnach (DE)
(74) Vertreter: Alber, Norbert

(57) **Zusammenfassung**

Um bei einer Tube auch den im Vorderteil (1) verbleibenden Rest des Inhalts zu entnehmen, ist z. B. im Bereich der Schulter (3) eine weitere Öffnungsvorrichtung über die reguläre Auspressöffnung (7) hinaus vorgesehen.

## Beschreibung

### I. Anwendungsgebiet

Die Erfindung betrifft eine Tube.

### II. Technischer Hintergrund

Tuben werden zur Aufbewahrung und dosierten Entnahme von meist pastösem Inhalt benutzt und bestehen aus Metall bzw. Metallfolie und häufig aus Kunststoff, also z.B. Polypropylen oder Polyethylen oder Polyamid oder Ethylen-Vinyl-Alkohol oder einem Schichtaufbau aus beiden Materialien.

Eine Tube besitzt unterschiedliche Materialstärken, und zwar
- die größte Materialstärke im Bereich der Auspressöffnung, da hier häufig ein Außengewinde zum Aufschrauben einer Verschluss-Kappe vorhanden ist,
- eine meist etwas niedrigere Wandstärke im Bereich des Absatzes zu dem Tubenkörper, der so genannten Schulter, der in der Regel einen deutlich größeren Durchmesser als der Hals mit der Auspressöffnung besitzt, und
- eine nochmals verringerte Wandstärke im Bereich des Tubenkörpers, da dieser für das Auspressen leicht verformbar oder bei Tuben aus Metall auch wickelbar sein soll.

Der vordere Teil der Tube, also Hals, Schulter sowie der in den Tubenkörper übergehende Schulteransatz, sollen dagegen formstabil sein und sich auch bei einem Verformen des Tubenkörpers möglichst nicht verformen oder zumindest aufgrund der Eigenelastizität nach Beenden der Belastung des Tubenkörpers wieder zurückverformen.

Bei Tuben aus Kunststoff sind prinzipiell zwei Herstellungsverfahren bekannt:
Bei der einteiligen Herstellung wird im Spritzgussverfahren die gesamte Tube mit einem offenen hinteren, zylindrischen Ende in einem Spritzvorgang hergestellt.

Bei der zweiteiligen Bauweise wird nur das Frontteil, also Hals, Schulter und Schulteransatz, im Spritzgussverfahren hergestellt und anschließend eine Folie mit ihrem Rand auf dem Schulteransatz aufgewickelt und mit diesem verklebt oder verschweißt, meist ultraschallverschweißt, und auch die herumgewickelte Folie mittels einer Längsnaht zu einem Zylinder geschlossen, sofern nicht von vornherein eine zylindrische Folie mit zwei offenen Stirnseiten auf den Schulteransatz aufgeschoben und verschweißt wird.

Gerade bei Kunststofftuben besteht wegen ihrer Materialelastizität dabei häufig das Problem, dass der Rest des Inhaltes meist nicht über Auspressen aus der Auspressöffnung entnommen werden kann, abhängig von der axialen Länge des Schulteransatzes, der verwendeten Materialstärken und anderer Faktoren.

Um Tuben soweit wie möglich zu entleeren, ist es bereits bekannt, eine Tube vom hinteren Ende her aufzuwickeln mit Hilfe einer separaten Wickelklemme, so dass der Tubenkörper mit der Zeit dicht bis an das Vorderteil der Tube herangewickelt werden kann und dazwischen keine Restmenge verbleibt.

Auch dadurch kann jedoch meist nicht verhindert werden, dass unmittelbar im Vorderteil, vor allem im Bereich des Schulteransatzes, ein Rest an Inhalt verbleibt.

### III. Darstellung der Erfindung

### a) Technische Aufgabe

Es ist daher die Aufgabe gemäß der Erfindung, eine Tube sowie ein Verfahren zu ihrer Herstellung zur Verfügung zu stellen, mit deren Hilfe die Tube vollständig entleert werden kann.

### b) Lösung der Aufgabe

Diese Aufgabe wird durch die Merkmale der Ansprüche 1 und 13 gelöst. Vorteilhafte Ausführungsformen ergeben sich aus den Unteransprüchen.

Erfindungsgemäß besitzt die Tube neben der regulären Auspressöffnung im Zentrum des Vorderteils der Tube eine weitere Öffnungsvorrichtung im Bereich der Schulter oder des Schulteransatzes der Tube, die vom Benutzer erst dann geöffnet werden soll, wenn die Tube bis auf den regulär über die Auspressöffnung nicht mehr entnehmbaren Rest des Inhalts in der Tube geleert ist.

Wenn dann die weitere Auspressöffnung im Bereich der Schulter oder des Schulteransatzes geöffnet wird - die danach zumindest nicht mehr vollständig und dicht verschließbar ist - kann über diese Öffnungsvorrichtung, die nach dem Öffnen eine möglichst großflächige Öffnung ergeben soll, von hinten in das Vorderteil der Tube hineingegriffen werden und der dort vorhandene Rest des Inhalts aus dem Vorderteil z. B. mit einem an der Tube lösbar befestigtem Stäbchen oder Löffel oder einfach mit dem Finger entnommen werden.

Diese Öffnungsvorrichtung kann sehr unterschiedlich gestaltet sein:
Eine erste Ausführungsform ist ein Aufreißstreifen, der in die Schulter oder den Schulteransatz der Tube eingearbeitet ist, also einstückiger Bestandteil der Tube ist. Der Aufreißstreifen wird beispielsweise gebildet durch beidseits des Aufreißstreifens in dessen Verlaufsrichtung vorhandene Einkerbungen in dem Material der Tube, sei es auf deren Außenseite oder Innenseite.

Am einen Ende des Aufreißstreifens ist dabei vorzugsweise ein nach außen über den normalen Umfang der Tube vorstehender Nippel angeordnet, den man z. B. mit zwei Fingern ergreifen kann und durch entlang ziehen in Richtung des Aufreißstreifens den Aufreißstreifen aus dem umgebenen Rest der Tube herauslösen kann. Wenn sich der Aufreißstreifen dabei z. B. über mehr als die Hälfte des Umfanges erstreckt, kann nach Herauslösen des Aufreißstreifens - der mit seinem Ende durchaus mit der Tube verbunden bleiben kann - der Hals der Tube zusammen mit dem Teil der Schulter bis zum Aufreißstreifen gegenüber dem Rest der Tube zur Seite geklappt werden und über die so entstehende Öffnung in die Tube hineingegriffen werden.

Wenn dabei der Rest des Inhalts der Tube nicht auf einmal aus dem Vorderteil entnommen wird, kann der weg geklappte Teil des Vorderteiles auch wieder zurückgeklappt werden, wobei der nicht durch den Aufreißstreifen geöffnete Umfangsbereich als Scharnier wirkt.

Der Aufreißstreifen muss natürlich so gestaltet sein, dass die Tube im normalen Einsatz noch ausreichend stabil ist und insbesondere die obligatorische Druckprüfung besteht. Wenn der Aufreißstreifen beispielsweise durch die beiden ihre Ränder bildenden Einkerbungen gebildet wird, ist es vorteilhaft, wenn diese Einkerbungen entlang des Aufreißstreifens nicht durchgehen, sondern immer wieder durch Bereiche unverminderter Materialstärke unterbrochen sind, um die Stabilität der Tube nicht zu stark zu schwächen. Die Bereiche unveränderter Materialstärke sollten dabei deutlich geringer sein als die Länge der Einkerbungen, und insbesondere unter 2 mm lang sein.

Der Aufreißstreifen kann auch eine größere Dicke als die umgebenden Bereiche der Tube besitzen, indem der dadurch entstehende Absatz zwischen verstärktem Aufreißstreifen und umgebenden dünneren Material als Sollbruchstelle beim Aufreißen des Aufreißstreifens dient.

Auch die umgekehrte Gestaltung ist möglich.

In einer zweiten Ausführungsform besitzt die Tube ebenfalls eine in Umfangsrichtung verlaufende Einkerbung, vorzugsweise jedoch nur eine einzige und keine zwei parallel laufenden Einkerbungen.

Wenn diese Einkerbung - die, wie zuvor beschrieben, durchgängig oder auch unterbrochen durch nicht gekerbte Bereiche gebildet sein kann - über einen Umfangsbereich von mehr als der Hälfte, aber weniger als 270° verläuft, und zwar insbesondere im Schulteransatz, so kann die Tube geöffnet werden, indem das Vorderteil relativ zum Tubenkörper abgeknickt wird, und entlang dieser Einkerbung dadurch ein Aufplatzen der Tube bewirkt wird. Dies ist besonders einfach dann möglich, wenn sich der eingekerbte Umfangsbereich in Umfangsrichtung über die Stelle hinweg erstreckt, an der sich eine der beiden Ecken der hinteren Verschlussnaht befindet, denn zum Ergreifen der Tube zum Zwecke des Knickens wird der Tubenkörper am Besten in der Ebene gehalten und dabei flach gedrückt, die durch die beiden Ecken der Verschlussnaht vorgegeben wird.

Wenn eine solche umlaufende Einkerbung sich dagegen über den gesamten Umfang erstreckt, und wiederum vorzugsweise im Schulteransatz, kann der Tubenkörper gegenüber dem Vorderteil der Tube auch abgedreht werden, indem die beiden Teile von je einer Hand des Benutzers ergriffen und um die axiale Richtung gegeneinander verdreht werden. Auch dabei platzt die Einkerbung als erstes an einer bestimmten Umfangsstelle auf und reißt nicht über den gesamten Umfang auf einmal ab, sodass auch bei dieser Öffnungsmethode ein Umfangsbereich verbleibt, an dem Tubenkörper und Tubenvorderteil miteinander verbunden bleiben.

Eine solche Einkerbung zum Abdrehen kann sich auch in der Schulter befinden, und dann vorzugsweise in einem Radialbereich, der bei axialer Betrachtung durch die in der Verschlussstellung aufgeschraubte Verschlusskappe der Tube abgedeckt wird.

Denn dann kann an der Unterseite der Verschlusskappe an der gleichen radialen Stelle wie die Einkerbung ein spitzer Vorsprung vorstehen, der in die Einkerbung eindringt und diese durchsticht, wenn die Verschlusskappe weit genug vorwärts auf das Außengewinde der Tube aufgeschraubt wird.

Da dies im normalen Betrieb der Tube nicht zufällig erfolgen soll, ist im Außengewinde des Halses oder im Innengewinde der Verschlusskappe an einer bestimmten Stelle ein Endanschlag so angeordnet, dass bei Erreichen des Endanschlages durch die Verschlusskappe diese ihre normale Schließstellung erreicht.

Soll dagegen die zusätzliche Öffnungsvorrichtung geöffnet werden, dreht man mit zusätzlichem Kraftaufwand die Verschlusskappe über diesen Endanschlag hinweg, der zu diesem Zweck entsprechend überwindbar dimensioniert sein muss, und zerschneidet mit Hilfe des Vorsprunges an der Verschlusskappe die Schulter des Vorderteils, die sich daraufhin leicht zur Seite klappen lässt, gegenüber dem Rest der Tube.

Eine weitere Methode besteht darin, das Abdrehen oder zur Seite Klappen des Halses und eines Teils des Vorderteiles der Tube gegenüber dem Rest der Tube zu erleichtern mithilfe einer entsprechenden Benutzung der Verschlusskappe:

Zu diesem Zweck besitzt die Verschlusskappe auf Ihrer äußeren Stirnseite im Zentrum ein zusätzliches Sackloch-Gewinde, welches ebenfalls auf das Außengewinde des Halses der Tube passt, sodass die Verschlusskappe außer in der normalen Verschlussstellung auch in umgekehrter Axialrichtung auf das Außengewinde des Halses der Tube aufgeschraubt werden kann.

Bei entsprechender axialer Gestaltung der Verschlusskappe, insbesondere indem dieses zusätzliche Sackloch-Innengewinde axial wesentlich kürzer ist als das normale Sackloch-Innengewinde, steht die Verschlusskappe axial über den Fugenkörper wesentlich weiter vor, wenn sie mit Ihrem zusätzlichen Sackloch-Innengewinde, also umgekehrt, auf den Hals der Tube aufgeschraubt ist.

Dieser vergrößerte axiale Hebel kann dazu genutzt werden, um bei einer nur über einen Teil des Umfanges umlaufenden Einkerbung den Hals der Tube gegenüber dem Tubenkörper zur Seite zu drücken und durch dieses Knicken die Einkerbung aufreißen zu lassen. Über den gesamten Umfang durchgehenden Einkerbung, die durch Abdrehen geöffnet werden soll, kann das Abdrehen erleichtert werden, indem die Verschlusskappe in dieser umgekehrt aufgesetzten Stellung am freien Ende zwei einander gegenüberliegend, axial vorstehende Flügel aufweist, mit deren Hilfe ein hohes Drehmoment auf die Verschlusskappe aufgebracht werden kann.

Die **Vorgehensweise** der Herstellung der erfindungsgemäßen Tube mit einer zusätzlichen Öffnungsvorrichtung ist dabei gleich oder nur unwesentlich anders als die Herstellung einer konventionellen Tube:

Entweder wird beim Spritzen der Tube bzw. des Vorderteils durch eine Veränderung in der Form die eine oder mehreren Einkerbungen und/oder der Nippel am Ende des Aufreißstreifens einstückig mitgespritzt, also im selben Arbeitsgang hergestellt.

Die andere Methode besteht bei zweiteilig hergestellten Tuben darin, die notwendige eine oder mehreren Einkerbungen beim Verbinden des Tubenkörpers und des Vorderteiles durch Heißstempel oder Ultraschallsiegeln mit einzubringen, vorzugsweise in einem Arbeitsgang, etwa indem das Siegelwerkzeug so tief in den Kunststoff eintaucht, dass gleichzeitig die beabsichtigte Kerbwirkung für die Einkerbungen erzielt wird.

### c) Ausführungsbeispiele

Ausführungsformen gemäß der Erfindung sind im Folgenden beispielhaft näher beschrieben. Es zeigen:

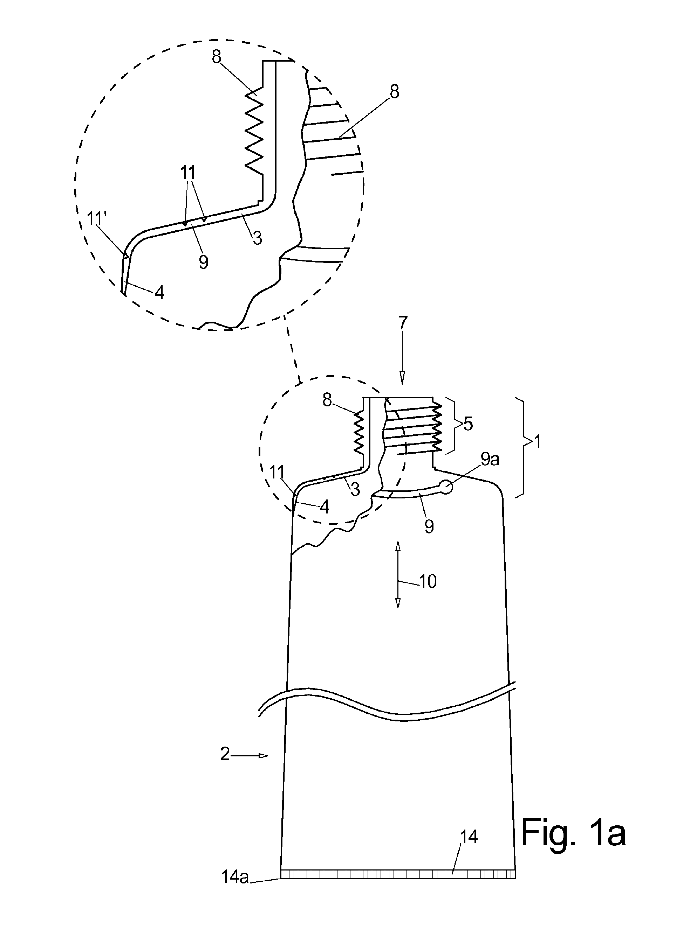

- Figur 1a:: einen Teilschnitt durch eine Tube gemäß einer ersten Ausführungsform der Erfindung,
- Figur 1 b:: eine Aufsicht auf die Auspressöffnung der Tube gemäß Figur 1 a,
- Figur 2a:: eine Seitenansicht auf eine Tube gemäß einer zweiten Ausführungsform gemäß der Erfindung,
- Figur 2b:: eine Aufsicht auf die Auspressöffnung gemäß Figur 2a,
- Figur 3a:: einen Schnitt durch eine dritte Ausführungsform gemäß der Erfindung, und
- Figur 3b:: eine Aufsicht auf die Auspressöffnung gemäß Figur 3a.

**Figur 1a** zeigt im Längsschnitt eine Tube, die wie üblich aus einem Vorderteil 1, bestehend aus dem Hals 5 und der daran sich anschließenden, verbreiternden Schulter 3 besteht, welche am Schulteransatz 4 in den Tubenkörper 2 übergeht, der am Schulteransatz 4 in der Regel noch eine zylindrische Form besitzt und durch die quer verlaufende Verschlussnaht 14 am unteren Ende einen immer flacheren Querschnitt nach unten besitzt.

Dabei ist es unerheblich, ob Vorderteil 1 und Tubenkörper 2 einstückig miteinander hergestellt oder nachträglich miteinander verbunden worden sind.

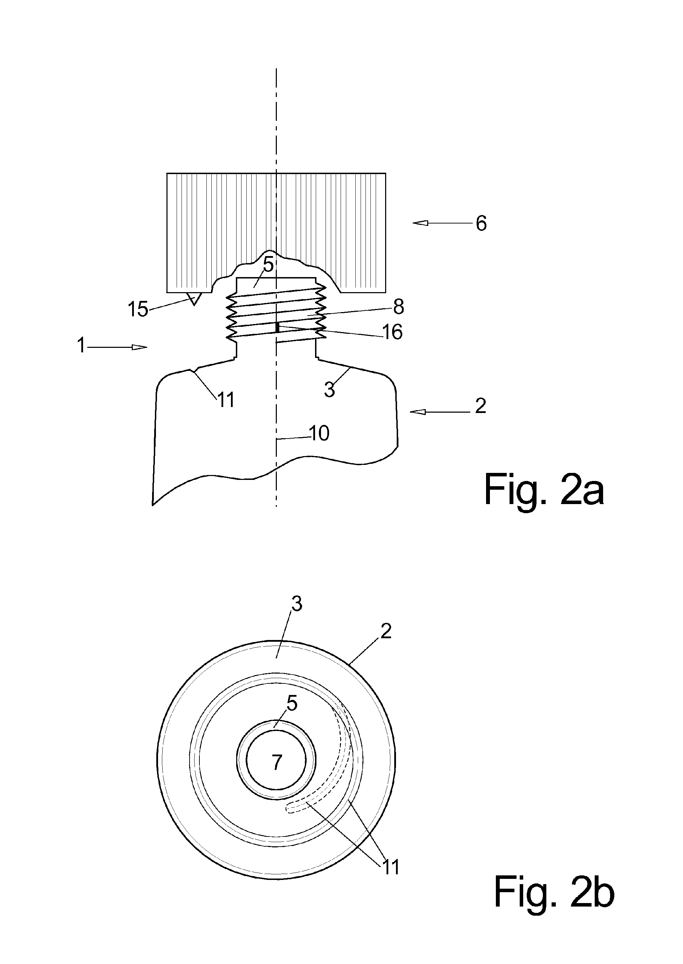

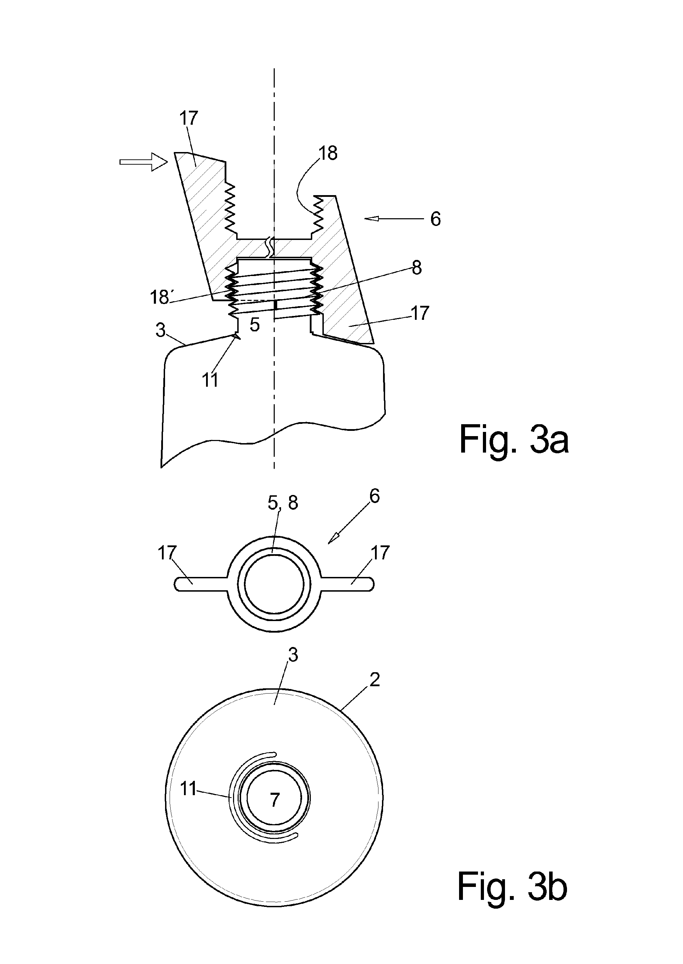

Auf der Außenseite des Halses 5 ist ein Außengewinde 8 aufgebracht, welches zum Aufschrauben einer hier nicht dargestellten Verschlusskappe dient, wie sie beispielsweise in den Figuren 2a und 3a in einer speziellen Bauform vorhanden ist.

Vor allem in der Vergrößerung ist erkennbar, dass die Wandstärke im Hals 5 wegen des Außengewindes 8, aber auch in der Schulter 3 deutlich größer ist als im Bereich des Tubenkörpers 2 und im Schulteransatz 4 die Wandstärke in Richtung der Wandstärke des Tubenkörpers 2 abnimmt.

Die erfindungsgemäße Besonderheit bei dieser Ausführungsform ist ein Aufreißstreifen 9, der um den Hals 5 wenigstens teilweise umlaufend in der Schulter 3 ausgebildet ist und in diesem Fall konzentrisch umläuft und zwar über einen Umfangsbereich von etwas mehr als 180 Grad, so dass ein Umfangsbereich 12 von etwas weniger als 180 Grad unverändert verbleibt.

Der Aufreißstreifen 9 wird gebildet durch zwei nebeneinander, vorzugsweise parallel zueinander verlaufende Einkerbungen 11 in diesem Fall auf der nach außen gerichteten Oberseite der Schulter 3, die als Sollbruchstelle dienen, wenn der Bereich dazwischen aus der Schulter 3 herausgerissen wird.

Dies ist möglich, indem der Beginn des Aufreißstreifens 9 als Nippel 9a zum Ergreifen auf der Schulter 3 aufliegt bzw. über diese vorsteht, und von dort aus der Aufreißstreifen 9 entlang der Einkerbungen 11 herausgerissen werden kann.

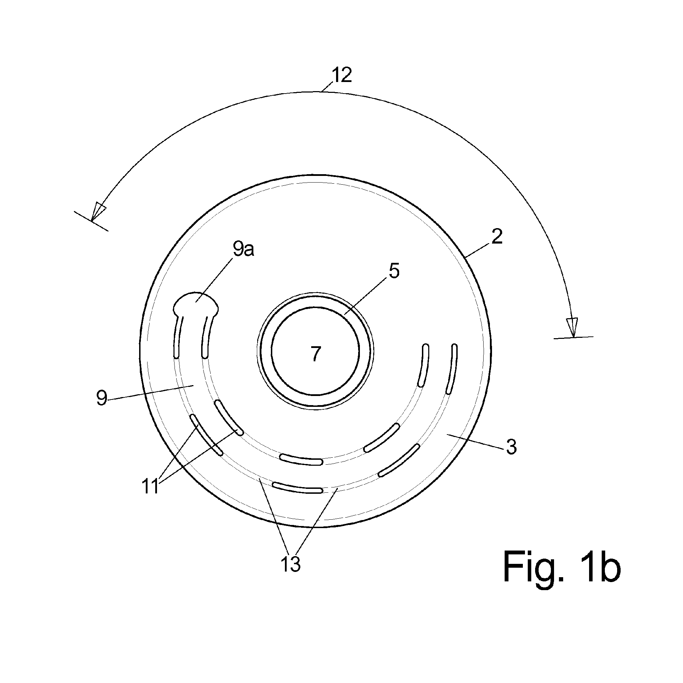

Wie die Figur 1b zeigt, müssen die Einkerbungen 11 dabei nicht über die gesamte Länge des Aufreißstreifens 9 verlaufen, sondern sind in Verlaufsrichtung immer wieder unterbrochen durch Zwischenstege 13 mit nicht reduzierter Materialstärke, wobei vorzugsweise die Zwischenstege 13 deutlich kürzer als die Einkerbungen 11 dazwischen sind.

In Figur 1a ist als Alternative zum Aufreißstreifen 9 im Bereich des Schulteransatzes eine einzelne Einkerbung 11' dargestellt, die ebenfalls in diesem Bereich vorzugsweise um etwas mehr als 180 Grad die axiale Richtung 10 umläuft. Diese einzelne Einkerbung kann dazu benutzt werden, den Tubenkörper 2 von der Verschlussnaht 14 her flachzudrücken oder aufzuwickeln bis zu dieser Einkerbung 11 hin, die daraufhin einreißt, weshalb sie in einem Bereich solcher Materialstärke des Schulteransatzes 4 angeordnet sein muss, dass dort mit normalem Kraftaufwand bereits ein Flachdrücken der Tube möglich ist.

Die **Figuren 2a, b** zeigen eine Lösung, bei der in der Schulter 3 ebenfalls nur eine Einkerbung 11 vorhanden ist, aber in einem solchen Abstand von der axialen Mitte 10, dass sie von der Verschlusskappe 6 im aufgeschraubten Zustand noch überdeckt wird.

Das Außengewinde 8 des Halses 5 besitzt dabei an einer Stelle einen Endanschlag 16 in Form einer Erhebung im Außengewinde 8, bis zu dem die Verschlusskappe 6 im normalen Betrieb aufgeschraubt wird.

Mit zusätzlichem Kraftaufwand kann die Verschlusskappe 6 jedoch über diesen Endanschlag 16 hinweg weiter vorwärts geschraubt werden und erst dann erreicht ein auf der Unterseite der Verschlusskappe 6 ausgebildeter scharfkantiger, nach unten weisender Vorsprung 15, der im radialen Abstand der Einkerbung 11 angeordnet ist, in axialer Richtung die Einkerbung 11 und dringt in diese ein, wodurch die Schulter 3 entlang der Einkerbung 11, die konzentrisch über wenigstens den größten Teil des Umfangs angeordnet ist, aufgeschlitzt wird.

Dadurch kann der Hals 5 nach vollständiger Abtrennung entnommen werden oder nach teilweiser Durchtrennung der Schulter 3 zur Seite geklappt werden.

Wie Figur 2b in der Aufsicht auf den Hals 5 zeigt, kann die Einkerbung 11 kreisförmig geschlossen radial den Hals 5 umlaufen oder auch ein spiralig zum Hals 5 hinlaufendes Ende aufweisen, so dass keine geschlossene Kontur entsteht und der Hals 5 auch im aufgeschnittenen Zustand der Einkerbung 11 noch am Rest der Tube verbleibt.

Die **Figuren 3a, b** zeigen eine Lösung, die ebenfalls eine Einkerbung 11 in der Schulter 3, vorzugsweise am Übergang zwischen der Schulter 3 und dem Hals 5, aufweist, die vollständig umlaufend oder über wenigstens etwas mehr als 180 Grad umlaufend ausgebildet ist. In diesem Fall wird diese Einkerbung 11 jedoch nicht aufgeschnitten, sondern auf andere Art geöffnet:

Wie Figur 3a erkennen lässt, wird eine speziell gestaltete Verschlusskappe 6 auf das Außengewinde 8 des Halses 5 aufgeschraubt, die neben dem regulären Sackloch-Innengewinde 18 zum Aufschrauben und Verschließen der Tube auf der gegenüberliegenden Stirnseite der Verschlusskappe 6 ein weiteres Sackloch-Innengewinde 18' aufweist, dessen axiale Tiefe jedoch deutlich geringer ist.

Da auch das zusätzliche Sackloch-Innengewinde 18' auf das Außengewinde 8 passt, kann die Verschlusskappe 6 in zwei unterschiedlichen Stellungen auf das Außengewinde 8 des Halses 5 aufgeschraubt werden, nämlich in der normalen Verschlussstellung, wie in der rechten Bildhälfte dargestellt, bei der die Verschlusskappe fast die Schulter 3 der Tube erreicht, und in der zweiten Stellung, in der sie mit dem Sackloch-Innengewinde 18' aufgeschraubt wird und dabei einen großen Abstand zur Schulter 3 einnimmt, dafür in axialer Richtung wesentlich weiter über den Hals 5 hinaus vorsteht.

Dieser größere axiale Überstand kann dazu benutzt werden, um radial gegen das freie Ende der Verschlusskappe 6 zu drücken und damit mit der vergrößerten Hebelwirkung die Einkerbung 11 aufzureißen.

Zusätzlich und/oder stattdessen kann die Verschlusskappe 6 so gestaltet sein, dass sie zwei über den rotationssymmetrischen Grundkörper der Verschlusskappe radial auf der gegenüberliegenden Seite vorstehende Flügel 17 aufweist, die in der normalen Verschlussstellung nahe an der Schulter 3 die größte radiale Erstreckung aufweisen.

Beim umgekehrten Aufschrauben in der zweiten Stellung, wie in der linken Hälfte der Figur 3a dargestellt, befinden sich diese radial weit vorstehenden Flügel 17 am freien Ende der Verschlusskappe 6.

Sie können dann vom Benutzer dazu verwendet werden, um mit großer Hebelwirkung ein hohes Drehmoment um die axiale Richtung 10 über die Verschlusskappe 6 auf den Hals 5 aufzubringen und dadurch den Hals 5 gegenüber dem mit der anderen Hand vom Benutzer festgehaltenen Tubenkörper 2 an der Einkerbung 11 abzudrehen, wofür sich diese Einkerbung 11 vorzugsweise über den gesamten Umfang erstrecken sollte.

### BEZUGSZEICHENLISTE

- 1: Vorderteil
- 2: Tubenkörper
- 3: Schulter
- 4: Schulteransatz
- 5: Hals
- 6: Verschlusskappe
- 7: Auspressöffnung
- 8: Außengewinde
- 9: Aufreißstreifen
- 9a: Nippel
- 10: Längsrichtung, axiale Richtung
- 11: Einkerbung
- 12: Umfangsbereich
- 13: Zwischensteg
- 14: Verschlussnaht
- 14a,b: Ecke
- 15: Vorsprung
- 16: Endanschlag
- 17: Flügel
- 18: Sackloch-Innengewinde

## Patentansprüche

1. Tube mit
- einem Vorderteil (1) mit einer Schulter (3), in deren Zentrum sich die Auspressöffnung (7), insbesondere in einem Hals (5), befindet,
- einer Verschlusskappe (6) zum Verschließen der Auspressöffnung (7),
und
- einem Tubenkörper (2), der dicht mit dem hinteren Ende des Vorderteiles (1), entweder der Schulter (3) oder einem nach hinten axial überstehenden Schulteransatz (4), verbunden ist,
**dadurch gekennzeichnet, dass**
eine weitere Öffnungsvorrichtung, insbesondere im Bereich der Schulter (3) oder des Schulteransatzes (4), vorhanden ist.
(Aufreißstreifen)

2. Tube nach Anspruch 1,
**dadurch gekennzeichnet, dass**
die Öffnungsvorrichtung einen Aufreißstreifen (9) umfasst, der insbesondere einstückiger Bestandteil der Tube ist und vorzugsweise einen nach außen vorstehenden Nippel (9a) des Aufreißstreifens (9) besitzt.

3. Tube nach einem der vorhergehenden Ansprüche,
**dadurch gekennzeichnet, dass**
der Aufreißstreifen (9) gebildet wird durch beidseits des Aufreißstreifens (9) in dessen Verlaufsrichtung sich erstreckende Einkerbungen (11), die auf der Innenseite oder Außenseite der Tube, insbesondere der Schulter (4), angeordnet sind.

4. Tube nach einem der vorhergehenden Ansprüche,
**dadurch gekennzeichnet, dass**
sich die Einkerbungen (11) über mehr als die Hälfte des Umfanges, jedoch nicht über den gesamten Umfang, erstreckt und ein ungeschwächter Umfangsbereich (1) vorhanden ist.

5. Tube nach einem der vorhergehenden Ansprüche,
**dadurch gekennzeichnet, dass**
die Einkerbungen (11) in Verlaufsrichtung mehrfach unterbrochen ist durch Zwischenstege (13).

6. Tube nach einem der vorhergehenden Ansprüche,
**dadurch gekennzeichnet, dass**
der Aufreißstreifen in der Schulter (3) oder im Schulteransatz (4) verläuft. (Einkerbung zum Knicken)

7. Tube nach einem der vorhergehenden Ansprüche,
**dadurch gekennzeichnet, dass**
über einen Teil des Umfanges von weniger als 270° eine in Umfangsrichtung verlaufende Einkerbung (11), insbesondere im Schulteransatz (4), vorhanden ist, insbesondere in einem Umfangsbereich in dem eine der beiden Ecken (14a,b) der hinteren Verschlussnaht (14) der Tube liegt.
(Einkerbung zum Abdrehen)

8. Tube nach einem der vorhergehenden Ansprüche,
**dadurch gekennzeichnet, dass**
eine um den gesamten Umfang in Umfangsrichtung umlaufende Einkerbung (11) insbesondere im Schulteransatz (4) vorhanden ist und die Einkerbung (11) insbesondere in Umfangsrichtung durch Zwischenstege (13) mehrfach unterbrochen ist.

9. Tube mit einer Verschlusskappe (6) zum Verschließen der Auspressöffnung (7) nach einem der vorhergehenden Ansprüche,
**dadurch gekennzeichnet, dass**
- in der Schulter (3) in axialer Richtung betrachtet unterhalb der von einer aufgeschraubten Verschlusskappe (6) befindlichen Fläche eine Einkerbung (11) über einen begrenzten Umfangsbereich oder über den gesamten Umfang vorhanden ist, insbesondere möglichst nah am Übergang zum Schulteransatz (4), und
- auf der Unterseite der Verschlusskappe (6) an der gleichen radialen Stelle ein Vorsprung (15) zum axialen Einpressen in die Einkerbung (11) vorhanden ist, der sich über einen Teil des Umfangs oder den gesamten Umfang erstreckt.

10. Tube nach einem der vorhergehenden Ansprüche,
**dadurch gekennzeichnet, dass**
im Außengewinde (8) des Halses (5) und/oder im Innengewinde der Verschlusskappe (6) an einer Stelle des Gewindes ein Endanschlag (16) so angeordnet ist, dass erst nach Überwinden dieses Endanschlags (16) der Vorsprung (15) in die Einkerbung (11) eingepresst wird.

11. Tube nach einem der vorhergehenden Ansprüche,
**dadurch gekennzeichnet, dass**
die Verschlusskappe (6) auf ihrer Außenseite im Zentrum ein Sackloch-Innengewinde (18) aufweist, welches auf das Außengewinde (8) des Halses (5) passt und insbesondere die in normaler Verschlussstellung aufgesetzte Verschlusskappe (6) am tubenseitigen Ende einen wesentlich größeren Durchmesser besitzt als am anderen Ende, und insbesondere am normal tubenseitigen Ende zwei auf einander gegenüberliegenden Seiten des Zentrums radial abstrebende Flügel (17) aufweist.

12. Tube nach einem der vorhergehenden Ansprüche,
**dadurch gekennzeichnet, dass**
an der Tube ein Stäbchen oder Löffel lösbar befestigt ist, der zum Entnehmen des Inhaltes aus der zusätzlichen Öffnung benutzt werden kann.

13. Verfahren zum vollständigen Entleeren einer Tube, indem nach dem Auspressen des Tubeninhalts aus der Auspressöffnung (7) der in der Tube verbliebene Rest entnommen wird durch Öffnen einer Öffnungsvorrichtung im Bereich des Vorderteiles der Tube, und über die daraus entstehende große Öffnung der Rest des Inhaltes entnommen wird.

14. Verfahren zum Herstellen einer Tube nach Anspruch 13,
**dadurch gekennzeichnet, dass**
die Öffnungsvorrichtung
- entweder beim Spritzen des Vorderteils 1 der Tube oder bei einstückiger Herstellung der Tube beim Spritzen der gesamten Tube miteingespritzt wird oder
- die Öffnungsvorrichtung, insbesondere deren mindestens eine Einkerbung (11), beim Ultraschallverschweißen von Tubenkörper (2) mit dem Vorderteil (1) eingebracht wird, insbesondere indem in einem Arbeitsgang mit dem Siegelwerkzeug auch die Einkerbung vorgenommen wird.
